Europäisches Patentamt

(19) European Patent Office

Office européen des brevets

(11) Publication number: **0 423 186 B1**

## EUROPEAN PATENT SPECIFICATION

(12)

(45) Date of publication of patent specification: **01.06.94** (51) Int. Cl.⁵: **G06F 15/40**

(21) Application number: **89907870.3**

(22) Date of filing: **30.06.89**

(86) International application number:
**PCT/SE89/00375**

(87) International publication number:
**WO 90/00776 (25.01.90 90/03)**

(54) **A METHOD AND A PRESENTATION SYSTEM FOR LINKING OF INFORMATION PRESENTED BY MEANS OF A PRESENTATION UNIT.**

(30) Priority: **07.07.88 SE 8802543**

(43) Date of publication of application:
**24.04.91 Bulletin 91/17**

(45) Publication of the grant of the patent:
**01.06.94 Bulletin 94/22**

(84) Designated Contracting States:
**AT BE CH DE FR GB IT LI LU NL SE**

(56) References cited:
**EP-A- 0 043 391**
**GB-A- 1 487 507**
**GB-A- 2 190 772**

**Computer, September 1987. p. 17-41: "Hypertext: An Introduction and Survey" by Jeff Conklin**

(73) Proprietor: **ABB ATOM AB**

**S-721 83 Västeras(SE)**

(72) Inventor: **MILLS, Richard, Jerry**
**5 Lawson Lane**
**Burlington, VT 05401(US)**

(74) Representative: **Boecker, Joachim, Dr.-Ing.**
**Adelonstrasse 58**
**D-65929 Frankfurt am Main (DE)**

## Description

### TECHNICAL FIELD

The present invention relates to a method for linking of information presented with the aid of a presentation unit, the information comprising a plurality of documents stored in document sources. The invention also relates to a presentation system with a presentation unit for presentation of information, comprising a plurality of documents stored in document sources, as well as members for linking of presented information.

### BACKGROUND ART

In information systems which contain and are to handle large quantities of information, considerable difficulties arise in surveying and rapidly and simply locating and presenting the desired information. This problem forms the basis of the invention.

When it comes to information which is stored in a computer or in a computer-readable form, a large number of programs, so-called data base managers, are available which are designed to solve these problems. The programs are based on the contents of the documents or the files being known, in which case a data base manager simplifies searching, reporting, and updating of the information. An essential property of data base managers is that they have to know the contents of the files or of the documents and their mutual relations.

Data base managers and similar computer programs fully depend on the existence of, or the possibility of making, a logic description of the information in question and of the relations between different parts of the information. They are well suited for processing large and also dynamic quantities of information but only to the extent it is possible to give a logical description of the information. For example, it is very difficult to handle pictures in data bases since it is extremely difficult for a program to read the contents of a picture. Thus, data bases are limited in their field of application. Also within the field of logically described and well-structured information, great problems with data base managers arise. It is thus difficult and very expensive to integrate information stored in existing but separate data bases since such an integration requires both compatible descriptions of the logical contents of the files and of their mutual relationships, and compatible programs.

From the journal COMPUTER, September 1987, pages 17-41, another method for information management is known, the so-called "hypertext". With this method it is possible to build up more or less arbitrary links between different parts of the information. For example, the word "computer" in a document can be linked to a data file which presents a definition of the word "computer". A user which encounters the word "computer" can thus easily jump to the linked file containing the definition of the word. The formation of a large number of such links in conjunction with a set of information gives a structuring of the data set. However, this method is also dependent on the nature of the information. The information which constitutes the starting point of a link must be readable and recognizable by a computer. The article also hints to the extension of such hypertext systems to the concept of hypermedia, which allows to build up links between completely arbitrary kinds of documents. However, the article does not describe methods for implementing such extensions. It does not describe or suggest any methods or system which could be used for linking completely arbitrary documents independently of their information contents. The field of use of the method is therefore limited and it cannot be used, or be used only with difficulty, for linking of, for example, arbitrary pictures.

Further, in connection with visual display units (VDU's) it is known to use so-called function symbols ("icons"). Such a function symbol represents a predetermined function which can be executed by moving a cursor on the VDU to the symbol, the execution being ordered by a suitable operating member. The predetermined function, as represented by the function symbol, is thus executed.

### DISCLOSURE OF THE INVENTION

The invention aims to provide a method and a device for a simple and generally applicable structuring of large sets of information, and this without any need for the contents of the various parts of the information to be logically described or even known.

What characterizes a method and a device according to the invention will be clear from the appended claims. In the following description of the invention the concept "document" will be used. This relates to a set of information of uniform kind which is available as a unit. Examples of documents are:
- a text file stored in a computer,
- a picture stored in a computer in the form of vectors in the manner used in CAD/CAM systems,
- a picture stored in a computer or the like in the form of a data word which defines each one of the picture elements of the picture, such as a picture defined by the output signal from a video camera,
- a picture or picture sequence stored on a video tape recorder or a video disc of such a kind as is capable of locating and accessing the picture by an external command,

- a sound sequence stored on tape or in a computer and accessible with the aid of an external command, and
- information stored on microfilm.

By the term "document source" as used in the following is meant that member in which a document is stored and from which the document can be accessed with the aid of a command. Examples of typical document sources are:

- a computer,
- a video tape recorder,
- a video disc recorder,
- a microfilm library, and
- an audio tape recorder.

The concept "presentation unit" as used in the following relates to a device for presentation of documents of the kind which are included in the set of information in question. Primarily, a presentation unit is intended to constitute a unit for visual presentation of information, and typically the presentation unit consists of a visual display unit (VDU) of the kind used in digital equipment, computers, etc. As will be clear from the above enumeration of examples of different kinds of documents and document sources, a presentation unit may also consist of or comprise, for example, a TV monitor, a loudspeaker, or a microfilm viewer.

BRIEF DESCRIPTION OF THE DRAWING

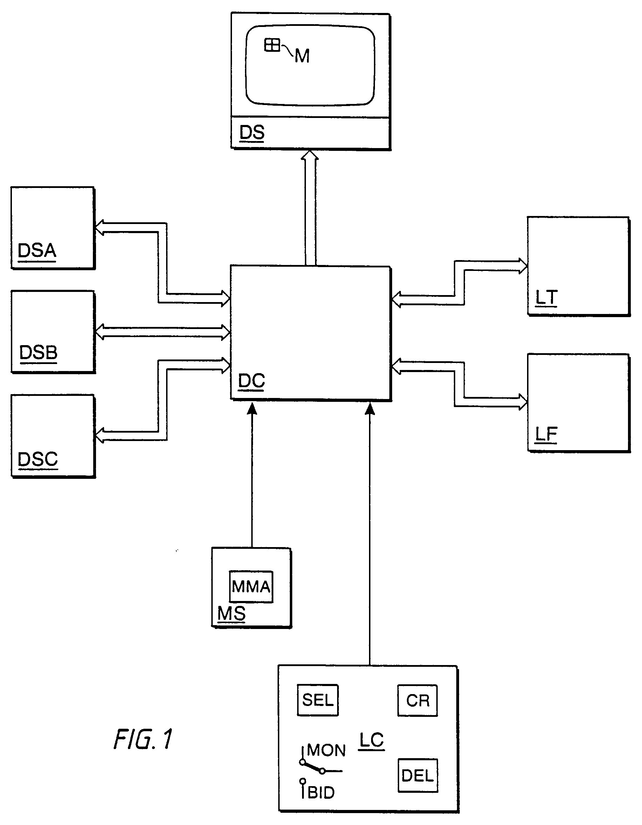

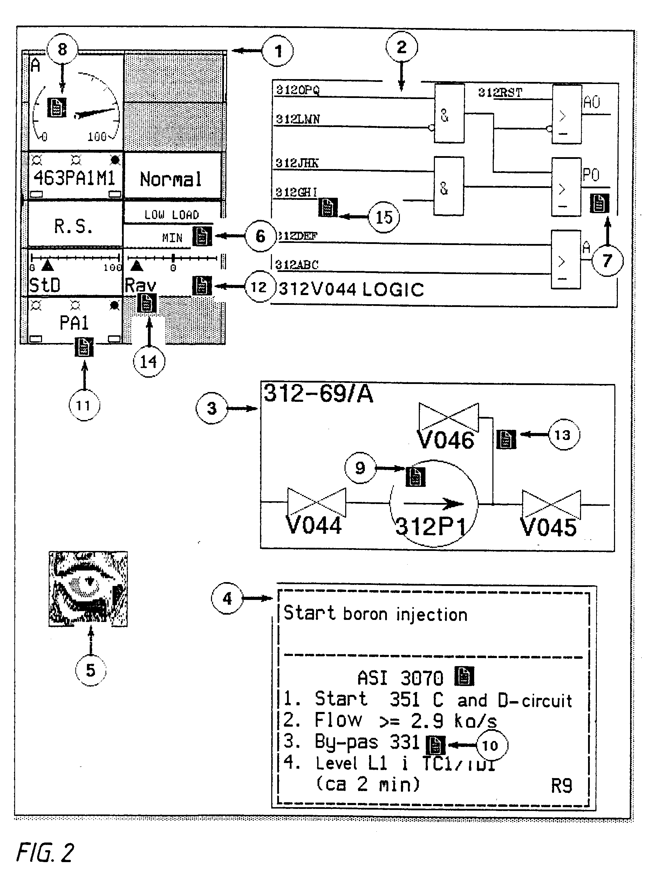

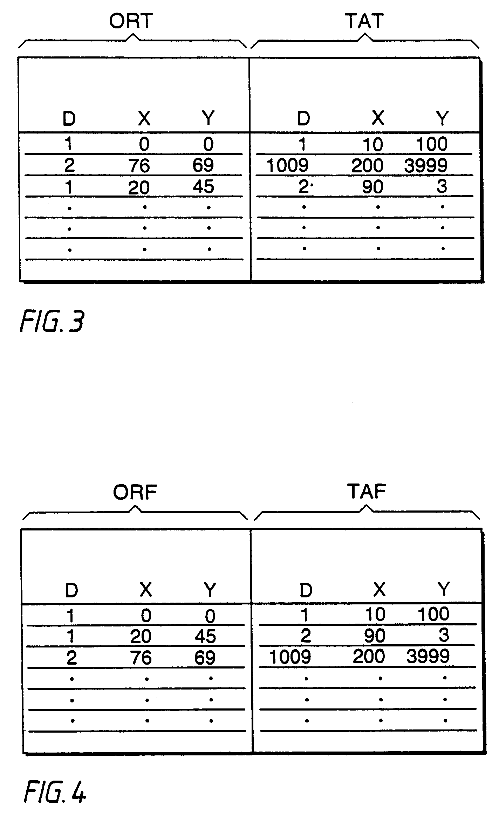

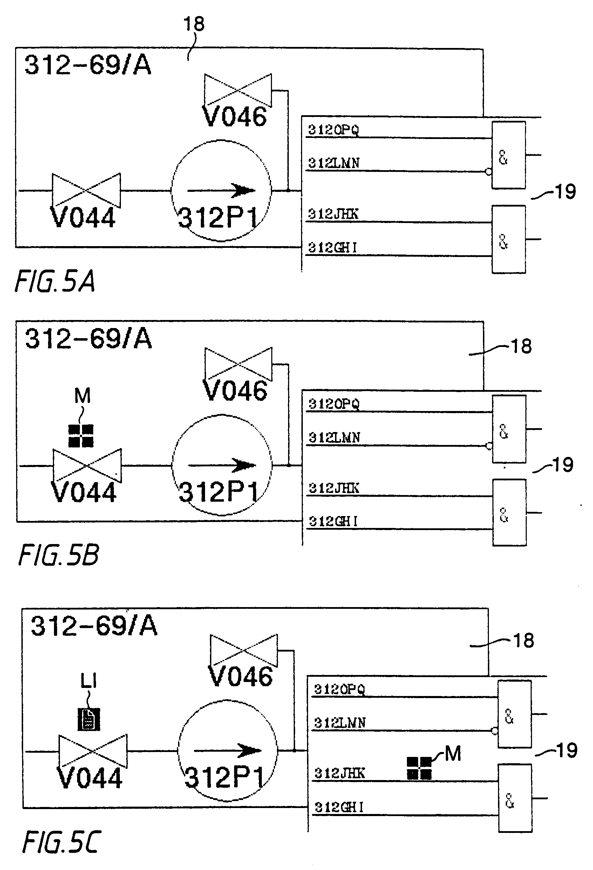

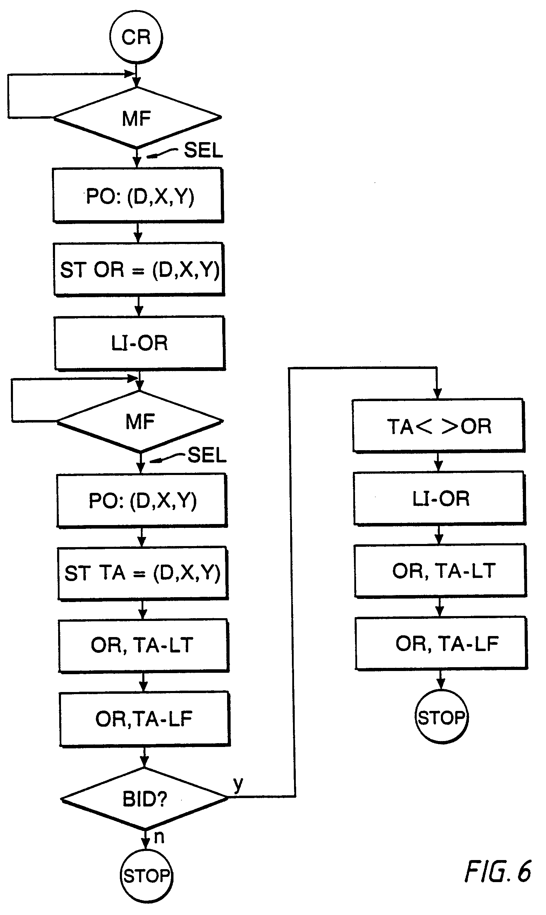

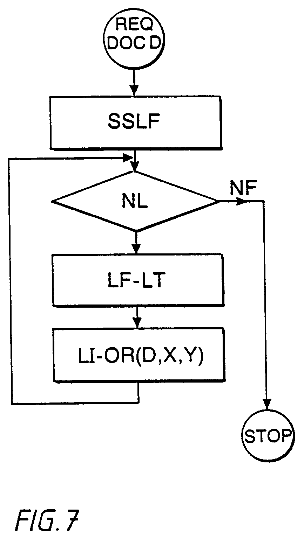

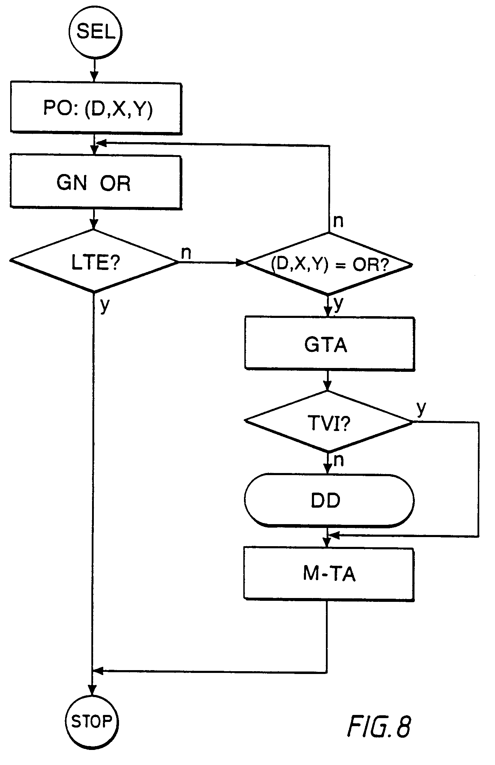

The invention will be described in the following with reference to the accompanying Figures 1-8. Figure 1 shows in the form of a block diagram a presentation system according to the invention. Figure 2 shows an example of a VDU presentation to illustrate the principle of the invention. Figure 3 and Figure 4 show the form in which information about the links is stored and the structure of the memory members which are used for storing the linked information, Figure 3 showing a so-called link table and Figure 4 a so-called link file. Figures 5A, 5B and 5C show an example of a VDU presentation to illustrate the generation of a link. Figure 6 shows the function of the presentation system and its interaction with the user when building up a link. Figure 7 shows in the form of a flowchart the function of the presentation system for presentation of a document. Figure 8 shows in the form of a flowchart the function of the presentation system and its interaction with the user upon activation of a link.

DESCRIPTION OF THE PREFERRED EMBODIMENTS

Figure 1 shows in the form of a block diagram an example of a presentation system according to the invention. It comprises a presentation unit DS, consisting of a VDU of a conventional kind. It is provided with a cursor M movable on the surface of the VDU. A number of document sources DSA, DSB, and DSC are included in or are connected to the presentation system. Typical examples of document sources have been indicated above. The presentation system has a control unit DC, which may consist of a digital equipment with the function which will be described in more detail below. The equipment may be specially built for the purpose, or it may consist of a programmable control system, or of a suitably programmed computer. It is not necessary for all the document sources to be separated from the control unit, but at least some documents may be stored in the control unit in the form of text files or data files.

Further, the presentation system comprises a link memory for storing information defining the links generated by the user. In the preferred embodiment shown in Figure 1 the link memory consist of two parts, a link file LF and a link table LT. The link file LF suitably consists of a non-volatile memory for more permanent storage of all the links included in the system. The link table LT suitably consists of a random-access memory (RAM), to which information is fetched from the link file LF and in which, at each moment, there is only stored information about those links which have origin points in the document or document part presented at that particular time. As shown in Figure 1, the two memories LF and LT may consist of separate memory units or, alternatively, form an integral part of the control unit DC.

For moving the cursor M across the surface of the VDU, an operating member MS is arranged. This may, for example, consist of a so-called "mouse" of a known kind, which via the control unit DC, upon depressing a pushbutton MMA and moving across, for example, the surface of a table, brings about a corresponding movement of the cursor M on the VDU.

Further, the presentation system comprises an operating member LC for generation and use of links. This operating member has four pushbuttons in the example shown. By depressing the button CR, it is indicated that a link is to be generated. By depressions of the button SEL, storage of the origin and target points of a link and activation of a link is accomplished. With the aid of a switch MON/BID, it is indicated whether a link is to be simple or bidirectional. The button DEL is used for deleting a link. The operating member LC may be combined with the operating member MS, i.e. the pushbuttons SEL, CR, DEL as well as the switch MON/BID are arranged on the mouse MS.

According to the invention, links are generated and defined only with the aid of the "geographical" position of the origin and target points of the links. A "place" in an arbitrary document can be linked with another "place" in the same or in any other arbitrary document. The generation of a link and its definition, storage and use are quite independent of the type and contents of the document or documents and only depend on the positions of the origin and target points in the respective documents. Typically, the word "place" has a visual significance. If, for example, the document consists of a text file, the concept "place" may relate to the name of the file and the row and column in the file. If, for example, the document consists of a picture, the concept "place" relates to the designation or identity of the picture, as well as X- and Y-coordinates in the picture. In those cases where a document consists of a picture or sound sequence, the concept "place" may relate to the file name or tape number and the number of seconds from the beginning of the sequence where the information in question is to be found, and possibly also the length of the information section in question.

Except in those cases when the document consists of a sound sequence, the link is generated and used visually. A link is created by showing the origin document and the target document on the VDU. Thereafter, the origin point and target point of the link are selected with the aid of a mouse or the like. A link symbol is placed at least at the origin point and possibly also at the target point. When a link has thus been created, the link can be used by moving the VDU cursor to a link symbol whereupon the link is activated with the aid of a pushbutton (SEL).

Figure 2 illustrates the above method. It shows parts of five documents 1-5. Document 1 consists of a picture of part of a control panel. Document 2 consist of a logical diagram. Document 3 consists of a fluid diagram. Document 4 consists of a text file. Document 5 consists of a scanned picture. The figure shows a number of link symbols. For example, points 6 and 7 are linked to each other. If the VDU cursor is moved to the link symbol 6 and the push-button SEL is activated, the cursor will automatically be moved to point 7. In the same way, point 8 is linked to point 9, point 10 to point 11, point 12 to point 13, and point 14 to point 15. The scanned picture 5 is not linked to any other document.

In practice, the number of documents and their size are much larger than what can be shown simultaneously on a VDU. When it is stated above that a selection of the link symbol 6 causes the cursor to jump to point 7, it is actually meant that unless the place of the document, marked with point 7, is already presented on the VDU, that part of the document 2 comprising the link symbol 7 will be fetched from a document source and be presented on the VDU, whereafter the cursor will be moved to the link symbol 7.

The implementation of a method and a device according to the invention can be made in an extremely simple way. The links are stored and used as simple pairs of three-dimensional constants (possibly one- or two-dimensional). The first dimension is an identification of the document, the second is the X-coordinate and the third the Y-coordinate. The simplification is made possible by the fact that storage and handling of these coordinates are independent of the type and contents of this document. Thus, a link consists of a pair of multi-dimensional coordinates, one for the origin point and one for the target point of the link. If each one of the two end points of a link can alternatively constitute origin point or target point, the link is bidirectional.

For a human operator it is very simple to remember, perceive and associate to visual information and particularly to "geographical location". A considerable advantage of the invention therefore consists in the "geographical location" or the "place" being used for generation and use of links, and this quite independently of the contents of the documents in question. This very independence of the contents of the documents impart to the method and the device of the invention its very general applicability, its simplicity and its large usefulness.

An essential part of the invention is the storage of the information about the links in the form of a table with coordinate pairs, which is called the link table and is shown in Figure 3. As mentioned above, this table suitably consists of a RAM memory and the information is stored in a number of rows with one coordinate pair in each row. Thus, each row defines a link. The memory has two columns, one column ORT, in which the coordinates of the origin points are stored, and one column TAT, in which the coordinates of the target points are stored. A coordinate is expressed as a three-dimensional quantity (D,X,Y). The first dimension identifies the document and may, for example, be the number of the document, a file name, or the name and number of a physical storage unit, such as a tape recorder or a video disc. The second and third dimensions (coordinates X and Y) can be seen as a definition of the location of the point within a two-dimensional document. If the document consists of a picture, X and Y define a point on the picture. If the document consists of a text, X and Y may define row and column in the text. If the document consists of a sound or picture sequence, X may define the number of the picture or the starting time of the beginning of the sequence, and Y defines the number of picture frames or the time of duration of the sequence.

The links in the link table need not be sorted in any special order. Preferably, the link table contains only those links whose origin points, at each instant, are presented on the VDU. This greatly reduces the storage requirements in the link memory and a fast searching of the link memory can be attained.

Figure 4 shows a second part of the link memory, the so-called link file. As mentioned above, it suitably consists of a non-volatile memory. The link file has the same content and structure as the link table with two exceptions. In the link file all existing links are permanently stored, and the links are stored in order of origin coordinates. The link file has one column ORF for the coordinates of the origin points and one column TAF for the coordinates of the target points. When a new document is called and presented on the VDU, the link file is searched and all links whose origin points have coordinates corresponding to the presented document or document part are copied to the link table.

Since the links are sorted in the link file, a rapid searching also of the link file is obtained.

A significant property of a method and a device according to the invention is that the link table and the link file do not constitute parts of the linked documents but constitute separate memories, files, or memory parts. This has the important advantage that the linking does not in any way modify or influence the linked documents.

A necessary feature of a method and a device according to the invention is the so-called pick operation. A link symbol presented on the VDU fills a certain area both in the X- and Y-direction and not just a single point. The pick operation translates the point indicated by the cursor to the identity of the object (the link symbol) which is pointed to by the cursor. Further, the pick operation translates the absolute X- and Y-coordinates (the VDU coordinates) to X- and Y-coordinates in the coordinate system of the presented object. In a method and a device according to the invention, the pick operation is used to identify, by means of the X- and Y-coordinates of the cursor, which link symbol is being pointed to by the cursor. Several pick operations are known in the art. An example of such a pick operation is described in Swedish patent specification 8501766-3 (Publication No. 454224).

To generate a link, the operator may fetch both the origin document and the target document so that these are shown at the same time on the VDU, and, of course, particularly those parts of the respective documents that contain the origin and target points of the desired link. The generation of a link is described with reference to Figures 5A, 5B and 5C and with the aid of the flowchart in Figure 6. The two documents may be assumed to have number 7 and number 2222 (reference numerals 18 and 19 in Figure 5). Then, the operator activates the pushbutton CR.

The operator's next action is to move the cursor M to the desired origin point of the link (see Figure 5B and block MF in Figure 6). Then, the pushbutton SEL is activated. The control unit DC reads the position of the cursor and senses which document and which point in the document are being pointed to (document No. 7 in our example). This operation consists of the block PO:(D,X,Y) in Figure 6. The resulting three-dimensional coordinate (D,X,Y) is stored as the coordinate of the origin point (block ST OR = = (D,X,Y) in Figure 6). Further, the control unit presents a link symbol LI on the VDU centred at the point (D,X,Y). See Figure 5C and the operation LI - OR in Figure 6. The three-dimensional coordinate may be assumed to be, for example, (7,100,200).

The operator's next action is to move the cursor to the coordinates of the target point. This is shown in Figure 5C and with the block MF in Figure 6. Next, the pushbutton SEL is activated. The control unit makes a new pick operation (PO:-(D,X,Y)) and determines the coordinates of the target point, which are stored. This operation is designated with the block ST TA = (D,X,Y) in Figure 6. The coordinates of the target point may be assumed to be (2222,250,190).

The coordinate pair thus determined and stored defines a link and this link information is now stored in the link table (OR, TA - LT) at the next available vacant row in the table. The same information is also stored in the link file (OR, TA - LF), but there in such a way that the links are sorted according to the coordinates of the origin points in order to simplify later searching operations. With the above coordinates, given as examples, the current row in the link table and the link file will be: (7,100,200) - (2222,250,190).

Links may be unidirectional or bidirectional. In the case of a unidirectional link, a link symbol is shown only at the origin point of the link and can move the VDU cursor in only one direction (towards the target point). A bidirectional link shows link symbols both at the origin point and at the target point of the link and has symmetric properties. The switch MON/BID shows what type of link is to be generated. If the link is to be unidirectional, the method for generation of the link now described is terminated. If a bidirectional link is desired, the switch MON/BID is set at position BID. The control system then shifts the coordinates of the origin and target points (operation TA < > OR in Figure 6). A link symbol is presented at the coordinates of the target point (operation LI - OR in Figure 6). The coordinate pair is thereafter entered as a separate link in the link table (OR, TA - LT) and in the link file (OR, TA - LF). It is not necessary that both the origin and target documents are displayed on the screen at the same time when generating a link. The operator's action "movement of cursor" (operation MF in Figure 6) may be interpreted as a movement of the cursor to places which are not presented on the VDU, i.e. a retrieval and presentation of new documents or new document parts.

A link can be deleted by the use of the above method. This is done by moving the cursor to the link symbol which marks the origin point of the current link, whereupon, by activation of the push-button DEL, the link information is deleted from the link table and the link file.

Figure 7 shows a flowchart of the method and the device according to the invention when presenting a document provided with links. The order to present the document (REQ DOC D) may emanate from a linking operation, from a manual request by the operator, or from any other source. When a new document or a new document part is presented on the VDU, a search is started in the link file (SSLF) for all the links whose first coordinate (the document identity) corresponds to the designation D of the presented document. The search is performed only with respect to the coordinates of the origin points (column ORF in Figure 4), and the coordinates of the target points are irrelevant to the search. Since the link file is sorted in order of origin coordinates, all links for document D will be found in one single contiguous section of the link file. This allows for more efficient search methods than the simplified method illustrated in Figure 7. The search is started at the beginning of the link file (SSLF) and goes on row by row until the next link with the first coordinate D has been found (operation NL). Then, the link information is copied from the link file to the link table (LF - LT) and a link symbol is presented in that position which is defined by the coordinates (D,X,Y) for the origin point of the link (the block LI - OR (D,X,Y)). The search is then continued until no further links are found (NF), and then the search is terminated.

Often only part of a document is shown on the VDU. The search method according to Figure 7 is then applied only to those links whose origin coordinates belong to the currently presented part of the document. The search method according to Figure 7 must be repeated each time the presented part of a document is changed somehow, such as when a window changes size or is moved.

When removing a document from the VDU, the link table is searched for those links whose document identification D matches the removed document or document part. The information in those rows in the link table which correspond to these links is deleted. The removal of a document from the system is also a simple procedure. If the document is at the moment displayed on the VDU, it is removed from the VDU in the manner just described. Then, the link file is searched and all the rows deleted which have the identity designation of the document in question as a first coordinate D, either in column ORF for origin points or in column TAF for target points.

Using a link is very simple. This function is illustrated in Figure 8. If the operator wishes to use a link in a presented document, he moves the cursor M to the link symbol and pushes the button SEL. The control unit then performs a pick operation PO:(D,X,Y) in which the coordinates of the cursor are sensed and used to identify the coordinates (D,X,Y) for the origin point of the link. These coordinates are compared with the origin point coordinates for each row in the link table, and since this table is relatively short, a simple and linear search can be made. This search is started at the beginning of the link table, the next row in the link table is called (GN OR), and then it is sensed whether the end point in the link table has been reached (LTE?). If the table is not finished, the origin point coordinates for the current row are compared with the coordinates D,X,Y obtained by the pick operation (operation (D,X,Y) = OR?). If the coordinates do not match, a new move to the next row is made, and so on. If, however, the coordinates do match, the coordinates of the target point are read from the current row and the righthand column in the link table (operation GTA). Thereafter, it is sensed whether that part of the target document which comprises the coordinates of the target point is visible on the VDU (TVI?). If this is the case, the cursor is moved to the target point (M - TA). If, however, the target point is not visible on the VDU, the target document, or that part thereof which includes the target point, must be fetched and be presented on the VDU (operation DD) whereupon the cursor can be moved to the target point and the process is terminated.

The embodiment of the invention described above only shows one of a large number of possible embodiments.

For example, the VDU used as presentation unit in the above embodiment may be replaced by or supplemented by other forms of presentation members. In the above example it has also been assumed that the coordinates of both the origin point and the target point have three dimensions. However, in certain cases it may be sufficient to denote the coordinates of the two points by one-dimensional or two-dimensional quantities.

The method and the device according to the invention can be used together with a computer to supplement the linking according to the invention with other linking or searching functions, known per se. Thus, for example, for a link in the link table and the link file, only the coordinates for the origin point can be given whereas the coordinates of the target point are missing. It is then assumed that the origin document in the origin point pointed at by the link symbol contains information about the target point of the link in a form which can be recognized and processed by a computer. Thus, for example, the target point of the link may be defined by a string of characters, painted at by the link symbol, in the origin document.

The method and the device according to the invention may be formed such that, in the absence of complete links according to the invention in the origin document, a change to the above-mentioned or other known linking or searching methods is automatically made.

In a method and a device according to the invention, the link symbol can also be used for other purposes than for linking between two documents. In the link information for a link stored in the link memory, instead of being arranged to indicate a document, the number of the target document may be arranged to define a calculation operation or some other arbitrary function. An activation of the link then causes execution of the selected calculation or function.

As will be clear from the above description, with the aid of the invention an organization of large data sets is obtained which is quite independent of the nature of the documents and also quite independent of the contents of the documents. This makes possible an extremely efficient handling of large data sets. The links can be created and used completely without the help of programming skills or programming methods, without any need to create or follow rules or logic conditions, and completely without requirements for knowledge of or a description of the contents of the documents in question.

The efficiency of the system in the preferred embodiment is the result of the chosen structure with a link table, which has a small extent and therefore can be searched very rapidly and be used for the documents presented at the moment, and a link file which contains link information for all links available in the system. Typically, the link table need only contain one or a few hundred links whereas the link file may have an arbitrarily large extent and, for example, contain information about several million links.

The method and the device according to the invention can be implemented in a very simple and economically advantageous way compared with the heavy costs spent on trying to obtain an efficient handling of large quantities of information by other means. Also, the extremely simple use of the system and its general applicability create great benefits for the user.

**Claims**

1. A method for linking of information presented with the aid of a presentation unit (DS), said information comprising a plurality of documents stored in document sources (DSA, DSB, DSC), the method comprising the steps of
   - storing information defining links, each link having an origin and a target,
   - presenting, when a document comprising the origin of a link is presented, a link symbol at the origin of the link,
   - presenting, upon activation of a link by indicating a desired link symbol, a target document comprising the target of the link,

   **characterized** in that

   A. the storing of information defining a set of links, which set includes a plurality of links, comprises the steps of storing for each link in a link file (LF), separately from the documents, information, comprising:

   for an origin document, information which, independently of document type and document contents, indicates the identity (D) of the origin document and the coordinates (X,Y) of the location in this document for the origin point (OR) of the link, and

   for a target document, information which, independently of document type and document contents, indicates the identity (D) of the target document and the coordinates (X,Y) of the location in this document for a target point (TA) of the link;

   B. using the link comprises the steps of indicating a desired link symbol and activating an operating member (LC) for link activation, whereupon, with the aid of the identity of the origin document and the coordinates (X,Y) of the location of the indicated link symbol in the origin document,

   a) the relevant link is located in the link file (LF),

   b) the identity of the target document and the location of the target point in this document are read out, and

   c) that part of the target document which comprises the target point is presented.

2. A method according to claim 1, **characterized** in that said link file (LF) is stored in a link memory (LF, LT) which is separate from the document source (DSA, DSB, DSC).

3. A method according to claim 1 or 2, **characterized** in that, when a document or part of a document is presented on the presentation unit (DS), link information for those links, whose origin points are located within the presented document or the presented part of the document, is fetched from the link file (LF) and stored in a link table (LT).

4. A method according to claim 3, **characterized** in that, when the presentation of a document or of part of the document is interrupted, the link information for those links, whose origin points are situated within the document or document part which is no longer presented, is deleted from the link table (LT).

5. A method according to any of the preceding claims in a presentation unit (DS) which has a movable cursor (M), **characterized** in that a link is created by presenting the desired origin document and moving the cursor to the desired origin point in the document, whereupon the location of the cursor in the document is read and a link symbol (LI) is presented at the origin point, that the target document is presented and the cursor is moved to the desired target point in the target document, whereafter the location of the cursor in the target document is read, and that the link information comprising document identity and location in the document for the origin and target points of the link is stored.

6. A method according to any of the preceding claims in a presentation unit (DS) which has a movable cursor (M), **characterized** in that when activating the link, the cursor, when presenting the target document, is moved to the target point.

7. A presentation system with a presentation unit for presentation of information which comprises
   - a plurality of documents stored in document sources (DSA, DSB, DSC),
   - link memory means (LF, LT) for storing information defining links, each link having an origin and a target,
   - members (DC, DS) for presentation of a link symbol (LI) at the origin of a link when a document comprising the origin of the link is presented,
   - members (M, MS, DC, DS) for indicating a desired link symbol, and

   - members (LC) for link activation,
   **characterized** in that said link memory means (LF, LT) comprises a link file (LF) for storing, for each link of a set of a plurality of links, separately from the documents and in the form of mere location defining coordinate pairs (X,Y), link information, comprising:
      - for an origin document, information which, independently of document type and document contents, indicates the identity (D) of the origin document and the location (X;Y) in this document for the origin point (OR) of the link, and
      - for a target document, information which, independently of document type and document contents, indicates the identity (D) of the target document and the location (X;Y) in this document for a target point (TA) of the link;
      - that the system comprises members (DC) adapted, when activating a link, with the aid of the identity (D) of the origin document and the location in the origin document of the indicated link symbol, to locate in the memory means (LT) the link information stored for the indicated link and to read from this the identity (D) of the target document and the location of the target point in the target document, and
      - that the system comprises members (DC, DS) adapted to present, with the aid of the information read from the memory concerning the target document, that part of the target document which comprises the target point.

8. A presentation system according to claim 7, **characterized** in that the link memory means (LF, LT) is a memory separate from the document sources.

9. A presentation system according to claim 7 or 8, **characterized** in that said link memory means comprises a link table (LT) and that the system comprises means (DC) adapted, when presenting a document, to fetch from the link file (LF) and store in the link table (LT) link information for those links whose origin points are located within the presented part of the document.

10. A presentation system according to any of claims 7-9, in which the presentation unit (DS) has a movable cursor (M) and operating members (MS) for moving the cursor, **characterized** in that it comprises operating members (LC) for generation of links as well as members (DC) adapted, when activating the last-mentioned operating members, to read off the location of the cursor in the document and to store in the memory (LF, LT) as link information the identity of the presented document and the location of the cursor in the document.

11. A presentation system according to any of claims 7-10, in which the presentation unit (DS) has a movable cursor (M), **characterized** in that it comprises members (DC) adapted, when activating a link, upon presentation of the target document to move the cursor to the target point.

**Patentansprüche**

1. Verfahren zur Verbindung von Informationen, die mittels einer Anzeige-Einheit (DS) angezeigt werden, wobei die Informationen eine Vielzahl von in Dokumentenquellen (DSA, DSB, DSC) gespeicherten Dokumenten umfassen, zu welchem Verfahren folgende Schritte gehören:
   - Speicherung von Informationen definierenden Verbindungen, wobei jede Verbindung einen Ursprung und ein Ziel hat,
   - Anzeige eines Verbindungs-Symbols am Ursprung der Verbindung, wenn ein Dokument angezeigt wird, welches den Ursprung einer Verbindung enthält,
   - Anzeige eines das Ziel der Verbindung enthaltenden Zieldokumentes beim Aktivieren einer Verbindung durch Angabe eines gewünschten Verbindungs-Symbols,

   **dadurch gekennzeichnet**, daß
   A. die Speicherung von Informationen, die einen Satz von Verbindungen definieren, der eine Vielzahl von Verbindungen enthält, die Schritte umfaßt, für jede Verbindung in einer Verbindungen-Datei (LF), unabhängig von den Dokumenten, Informationen zu speichern, die enthalten:
   für ein Ursprungsdokument Informationen, welche, unabhängig vom Dokumenten-Typ und vom Dokumenten-Inhalt, die Identifikation (D) des Ursprungs-Dokumentes und die Koordinaten (X,Y) der Lage des Ursprungspunktes (OR) der Verbindung in diesem Dokument angeben, und
   für ein Zieldokument Informationen, welche, unabhängig vom Dokumenten-Typ und Dokumenten-Inhalt, die Identifikation (D) des Ziel-Dokumentes und die Koordinaten (X,Y) der Lage des Zielpunktes (TA) der Verbindung in diesem Dokument angeben;
   B. die Benutzung der Verbindung die Schritte zur Angabe eines gewünschten Verbindungs-Symbols und zur Aktivierung eines Betätigungsgliedes (LC) zur Verbindungs-Aktivierung umfaßt, wonach mit Hilfe der Identifikation des Ursprungs-Dokuments und der Koordinaten (X,Y) der Lage des angegebenen Verbindungs-Symbols im Ursprungs-Dokument,
   a) die relevante Verbindung in der Verbindungen-Datei (LF) lokalisiert wird,
   b) die Identifikation des Zieldokuments und die Lage des Zielpunktes in diesem Dokument gelesen werden und
   c) der Teil des Zieldokumentes angezeigt wird, welcher den Zielpunkt enthält.

2. Verfahren nach Anspruch 1, **dadurch gekennzeichnet**, daß die genannte Verbindungen-Datei (LF) in einem Verbindungen-Speicher (LF, LT) gespeichert wird, welcher von der Dokumentenquelle (DSA, DSB, DSC) getrennt ist.

3. Verfahren nach einem der Ansprüche 1 oder 2, **dadurch gekennzeichnet**, daß, wenn ein Dokument oder ein Teil eines Dokuments auf der Anzeige-Einheit (DS) angezeigt wird, Verbindungs-Informationen für diejenigen Verbindungen, deren Ursprungspunkte in dem angezeigten Dokument oder angezeigten Teil des Dokuments liegen, aus der Verbindungen-Datei (LF) geholt werden und in einer Verbindungen-Tabelle (LT) gespeichert werden.

4. Verfahren nach Anspruch 3, **dadurch gekennzeichnet**, daß, wenn die Anzeige eines Dokuments oder eines Teils eines Dokuments unterbrochen wird, die Verbindungs-Information für diejenigen Verbindungen, deren Ursprungspunkte in dem nicht länger angezeigten Dokument oder Dokument-Teil liegen, in der Verbindungen-Tabelle (LT) gelöscht werden.

5. Verfahren nach einem der vorhergehenden Ansprüche mit einer Anzeige-Einheit (DS), welche einen bewegbaren Cursor (M) hat, **dadurch gekennzeichnet**, daß eine Verbindung dadurch hergestellt wird, daß das gewünschte Ursprungs-Dokument angezeigt wird und der Cursor zu dem gewünschten Ursprungspunkt in dem Dokument bewegt wird, worauf die Lage des Cursors in dem Dokument abgelesen wird und ein Verbindungs-Symbol (LI) an dem Ursprungspunkt angezeigt wird, daß das Zieldokument angezeigt wird und der Cursor zu dem gewünschten Zielpunkt in dem Zieldokument bewegt wird, wonach die Lage des Cursors in dem Zieldokument abgelesen wird, und daß die Verbindungs-Information, welche die Dokumenten-Identifikation und die Lage des Ursprungspunktes und des Zielpunktes der Verbindung in dem Dokument umfaßt, gespeichert wird.

6. Verfahren nach einem der vorhergehenden Ansprüche mit einer Anzeige-Einheit (DS), welche einen bewegbaren Cursor (M) hat, **dadurch gekennzeichnet**, daß beim Aktivieren der Verbindung der Cursor während der Anzeige des Zieldokuments zum Zielpunkt bewegt wird.

7. Anzeigesystem mit einer Anzeige-Einheit zur Anzeige von Informationen, welche enthalten
   - eine Vielzahl von in Dokumentenquellen (DSA, DSB, DSC) gespeicherten Dokumenten,
   - Verbindungen-Speicher-Mittel (LF, LT) zur Speicherung von Informationen, welche Verbindungen definieren, von denen jede Verbindung einen Ursprung und ein Ziel hat,
   - Glieder (DC, DS) zur Anzeige eines Verbindungs-Symbols (LI) am Ursprung einer Verbindung, wenn ein Dokument, welches den Ursprung der Verbindung enthält, angezeigt wird,
   - Glieder (M, MS, DC, DS) zur Angabe eines gewünschten Verbindungs-Symbols, und
   - Glieder (LC) zur Aktivierung einer Verbindung,

   **dadurch gekennzeichnet**, daß die genannten Verbindungen-Speicher-Mittel (LF, LT) eine Verbindungen-Datei (LF) enthalten für die Speicherung von Verbindungs-Informationen für jede Verbindung eines Satzes einer Vielzahl von Verbindungen, getrennt von den Dokumenten und in Gestalt eines bloßen eine Lage definierenden Koordinaten-Paares (X,Y), wobei die Verbindungs-Informationen enthalten:
   - für ein Ursprungs-Dokument Informationen, welche unabhängig vom Dokumenten-Typ und vom Dokumenten-Inhalt die Identifikation (D) des Ursprungs-Dokuments und die Lage (X,Y) in diesem Dokument für den Ursprungspunkt (OR) der Verbindung angeben, und
   - für ein Zieldokument Informationen, welche unabhängig vom Dokumenten-Typ und vom Dokumenten-Inhalt die Identifikation (D) des Zieldokumentes und die Lage (X,Y) in diesem Dokument für den Zielpunkt (TA) der Verbindung angeben,
   - daß das System Glieder (DC) enthält, die imstande sind, beim Aktivieren einer Verbindung mit Hilfe der Identifikation (D) des Ursprungs-Dokuments und der Lage des angegebenen Verbindungs-Symbols im Ursprungs-Dokument, in den Speicher-Mitteln (LT) die gespeicherte Verbindungs-Informationen für die angegebene Verbindung zu lokalisieren und aus dieser die Identifikation (D) des Zieldokuments und die Lage des Zielpunktes im Zieldokument zu lesen, und
   - daß dasSystem Glieder (DC, DS) enthält, die geeignet sind, mit Hilfe der aus dem Speicher gelesenen Informationen über das Zieldokumentes den Teil des Zieldokumentes anzuzeigen, welches den Zielpunkt enthält.

8. Anzeigesystem nach Anspruch 7, **dadurch gekennzeichnet**, daß die Verbindungen-Speicher-Mittel (LF, LT) von einem Speicher gebildet werden, welcher von den Dokumentenquellen getrennt ist.

9. Anzeigesystem nach einem der Ansprüche 7 oder 8, **dadurch gekennzeichnet**, daß die genannten Verbindungen-Speicher-Mittel eine Verbindungen-Tabelle (LT) enthalten und daß das System Mittel (DC) enthält, die bei der Anzeige eines Dokuments geeignet sind, Verbindungs-Informationen für diejenigen Verbindungen, deren Ursprungspunkte in dem angezeigten Teil des Dokuments liegen, aus der Verbindungen-Datei (LF) zu holen und in der Verbindungen-Tabelle (LT) zu speichern.

10. Anzeigesystem nach einem der Ansprüche 7 bis 9, wobei die Anzeige-Einheit (DS) einen bewegbaren Cursor (M) und Betätigungsglieder (MS) zur Bewegung des Cursors hat, **dadurch gekennzeichnet**, daß es Betätigungsglieder (LC) zur Erzeugung von Verbindungen sowie Glieder (DC) hat, die geeignet sind, bei der Aktivierung der zuletzt genannten Betätigungsglieder die Lage des Cursors im Dokument abzulesen und in dem Speicher (LF, LT) als Verbindungs-Information die Identifikation des angezeigten Dokuments und die Lage des Cursors in dem Dokument zu speichern.

11. Anzeigesystem nach einem der Ansprüche 7 bis 10, wobei die Anzeige-Einheit (DS) einen bewegbaren Cursor (M) hat, **dadurch gekennzeichnet**, daß es Glieder (DC) enthält, die in der Lage sind, beim Aktivieren einer Verbindung bei der Anzeige des Zieldokumentes den Cursor zu dem Zielpunkt zu bewegen.

## Revendications

**1.** Un procédé pour lier de l'information présentée à l'aide d'une unité de présentation (DS), cette information comprenant un ensemble de documents enregistrés dans des sources de documents (DSA, DSB, DSC), le procédé comprenant les étapes suivantes :

- on enregistre de l'information définissant des liens, chaque lien ayant une origine et une destination,
- lorsqu'un document qui constitue l'origine d'un lien est présenté, on présente un symbole de lien à l'origine du lien,
- sous l'effet de l'activation d'un lien par l'indication d'un symbole de lien désiré, on présente un document de destination qui constitue la destination du lien,

**caractérisé** en ce que

A. l'enregistrement d'information définissant un ensemble de liens, cet ensemble contenant plusieurs liens, comprend les étapes qui consistent à enregistrer pour chaque lien dans un fichier de liens (LF), séparément des documents, une information comprenant : pour un document d'origine, une information qui, indépendamment du type de document et du contenu du document, indique l'identité (D) du document d'origine et les coordonnées (X, Y) de l'emplacement dans ce document du point d'origine (OR) du lien, et pour un document de destination, une information qui, indépendamment du type de document et du contenu du document, indique l'identité (D) du document de destination et les coordonnées (X, Y) de l'emplacement dans ce document d'un point de destination (TA) du lien;

B. l'utilisation du lien comprend les étapes qui consistent à indiquer un symbole de lien désiré et à activer un élément d'actionnement (LC) pour l'activation du lien, et sous l'effet de ces actions, à l'aide de l'identité du document d'origine et des coordonnées (X, Y) de l'emplacement du symbole de lien indiqué dans le document d'origine,

a) le lien concerné est localisé dans le fichier de liens (LF),

b) l'identité du document de destination et l'emplacement du point de destination dans ce document sont lues, et

c) la partie du document de destination qui constitue le point de destination est présentée.

**2.** Un procédé selon la revendication 1, **caractérisé** en ce que le fichier de liens (LF) est enregistré dans une mémoire de liens (LF, LT) qui est séparée de la source de documents (DSA, DSB, DSC).

**3.** Un procédé selon la revendication 1 ou 2, **caractérisé** en ce que, lorsqu'un document ou une partie d'un document est présenté sur l'unité de présentation (DS), une information de liens concernant les liens dont les points d'origine se trouvent à l'intérieur du document présenté ou de la partie présentée du document, est prélevée dans le fichier de liens (LF) et elle est enregistrée dans une table de liens (LT).

**4.** Un procédé selon la revendication 3, **caractérisé** en ce que, lorsque la présentation d'un document ou d'une partie du document est interrompue, l'information de liens pour les liens dont les points d'origine sont situés à l'intérieur du document ou de la partie de document qui n'est plus présenté, est supprimée de la table de liens (LT).

**5.** Un procédé selon l'une quelconque des revendications précédentes, dans une unité de présentation (DS) qui comporte un curseur mobile (M), **caractérisé** en ce qu'on crée un lien en présentant le document d'origine désiré et en déplaçant le curseur vers le point d'origine désiré dans le document, après quoi on lit l'emplacement du curseur dans le document et on présente un symbole de lien (LI) au point d'origine, en ce qu'on présente le document de destination et on déplace le curseur vers le point de destination désiré dans le document de destination, après quoi on lit l'emplacement du curseur dans le document de destination, et en ce qu'on enregistre l'information de liens comprenant l'identité du document et l'emplacement dans le document des points d'origine et de destination du lien.

**6.** Un procédé selon l'une quelconque des revendications précédentes, dans une unité de présentation (DS) qui comporte un curseur mobile (M), **caractérisé** en ce que lorsqu'on active le lien, le curseur est déplacé vers le point de destination au moment de la présentation du document de destination.

**7.** Un système de présentation comportant une unité de présentation pour la présentation d'information, qui comprend

- un ensemble de documents enregistrés dans des sources de documents (DSA, DSB, DSC),
- des moyens de mémoire de liens (LF, LT) pour enregistrer une information définissant des liens, chaque lien ayant une origine et une destination,

- des éléments (DC, DS) pour la présentation d'un symbole de lien (LI) à l'origine d'un lien, lorsqu'un document constituant l'origine du lien est présenté,
- des éléments (M, MS, DC, DS) pour l'indication d'un symbole de lien désiré, et
- des éléments (LC) pour l'activation de liens,

**caractérisé** en ce que les moyens de mémoire de liens (LF, LT) comprennent un fichier de liens (LF) pour enregistrer, pour chaque lien d'un ensemble formé par plusieurs liens, séparément des documents et sous la forme de simples paires de coordonnées définissant un emplacement (X, Y), une information de liens, comprenant :

- pour un document d'origine, une information qui, indépendamment du type du document et du contenu du document, indique l'identité (D) du document d'origine et l'emplacement (X, Y) dans ce document du point d'origine (OR) du lien, et
- pour un document de destination, une information qui, indépendamment du type du document et du contenu du document, indique l'identité (D) du document de destination et l'emplacement (X, Y) dans ce document d'un point de destination (TA) du lien;
- en ce que le système comprend des éléments (DC) qui, au moment de l'activation d'un lien, à l'aide de l'identité (D) du document d'origine et de l'emplacement dans le document d'origine du symbole de lien indiqué, sont capables de localiser dans les moyens de mémoire (LT) l'information de liens qui est enregistrée dans le lien indiqué, et de lire dans cette information l'identité (D) du document de destination et l'emplacement du point de destination dans le document de destination, et
- en ce que le système comprend des éléments (DC, DS) qui sont conçus de façon à présenter, avec l'aide de l'information lue dans la mémoire concernant le document de destination, la partie du document de destination qui comprend le point de destination.

8. Un système de présentation selon la revendication 7, **caractérisé** en ce que les moyens de mémoire de liens (LF, LT) consistent en une mémoire séparée des sources des documents.

9. Un système de présentation selon la revendication 7 ou 8, **caractérsisé** en ce que les moyens de mémoire de liens comprennent une table de liens (LT) et en ce que le système comprend des moyens (DC) qui sont conçus pour prélever dans le fichier de liens (LF) et pour enregistrer dans la table de liens (LT), au moment de la présentation d'un document, une information de liens pour les liens dont les points d'origine se trouvent à l'intérieur de la partie présentée du document.

10. Un système de présentation selon l'une quelconque des revendications 7-9, dans lequel l'unité de présentation (DS) comporte un curseur mobile (M) et des éléments d'actionnement (MS) pour déplacer le curseur, **caractérisé** en ce qu'il comprend des éléments d'actionnement (LC) pour la génération de liens, ainsi que des éléments (DC) qui, au moment de l'activation des éléments d'actionnement mentionnés en dernier, lisent l'emplacement du curseur dans le document et enregistrent dans la mémoire (LF, LT) à titre d'information de liens, l'identité du document présenté et l'emplacement du curseur dans le document.

11. Un système de présentation selon l'une quelconque des revendications 7-10, dans lequel l'unité de présentation (DS) comporte un curseur mobile (M), **caractérisé** en ce qu'il comprend des éléments (DC) qui, au moment de l'activation d'un lien, à la présentation du document de destination, déplacent le curseur vers le point de destination.

FIG.1

FIG. 2

| ORT | | | TAT | | |
|---|---|---|---|---|---|
| D | X | Y | D | X | Y |
| 1 | 0 | 0 | 1 | 10 | 100 |
| 2 | 76 | 69 | 1009 | 200 | 3999 |
| 1 | 20 | 45 | 2· | 90 | 3 |
| . | . | . | . | . | . |
| . | . | . | . | . | . |
| . | . | . | . | . | . |

*FIG. 3*

| ORF | | | TAF | | |
|---|---|---|---|---|---|
| D | X | Y | D | X | Y |
| 1 | 0 | 0 | 1 | 10 | 100 |
| 1 | 20 | 45 | 2 | 90 | 3 |
| 2 | 76 | 69 | 1009 | 200 | 3999 |
| . | . | . | . | . | . |
| . | . | . | . | . | . |
| . | . | . | . | . | . |

*FIG. 4*

FIG.5A

FIG.5B

FIG.5C

FIG. 6

FIG. 7

FIG.8